(19) Europäisches Patentamt
European Patent Office
Office européen des brevets

(11) Publication number: **0 384 711 A1**

(12) **EUROPEAN PATENT APPLICATION**

(21) Application number: **90301813.3**

(22) Date of filing: **20.02.90**

(51) Int. Cl.[5]: **C08G 73/12, F16C 33/20, C08G 73/10**

(30) Priority: **23.02.89 JP 43925/89**
**27.12.89 JP 343329/89**

(43) Date of publication of application:
**29.08.90 Bulletin 90/35**

(84) Designated Contracting States:
**DE FR GB**

(71) Applicant: **NIPPON OIL AND FATS COMPANY, LIMITED**
**10-1, Yuraku-cho 1-chome**
**Chiyoda-ku Tokyo(JP)**

(72) Inventor: **Kawase, Kouji, C-1-102 Fuyo Heights**
**1151-2 Harajuku-cho, Totsuka-ku**
**Yokohama-shi, Kanagawa(JP)**
Inventor: **Takemoto, Masayuki**
**10-5-305, Omaru, Midori-ku**
**Yokohama-shi, Kanagawa(JP)**
Inventor: **Nomura, Yukio**
**138-6-303 Setogaya-cho, Hodogaya-ku**
**Yokohama-shi, Kanagawa(JP)**
Inventor: **Yasuda, Minoru, 21-505, Green Heim Izumino**
**6208-6 Izumi-cho, Izumi-ku**
**Yokohama-shi, Kanagawa(JP)**
Inventor: **Oyanagi, Yasushi**
**1, Yarai-cho, Shinjuku-ku**
**Tokyo(JP)**
Inventor: **Sekiguchi, Isamu**
**3130-4 Kamitsuruma**
**Sagamihara-shi, Kanagawa(JP)**

(74) Representative: **Perry, Robert Edward et al**
**GILL JENNINGS & EVERY 53-64 Chancery Lane**
**London WC2A 1HN(GB)**

(54) **Moulded product for sliding parts.**

(57) A moulded product having slip characteristics, comprising a resin and filler, the resin being obtainable by addition cross-linking of an amine-terminated amic acid of formula I

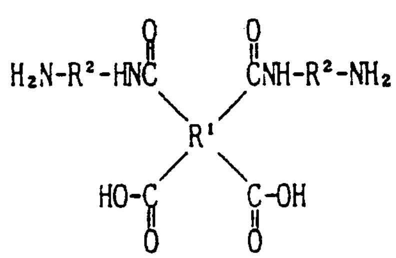

(I)

in which $R^1$ is a tetravalent $C_{5-20}$ aromatic residue and $R^2$ is a divalent $C_{2-20}$ organic residue and, per mole of the amic acid, 1 to 3 moles of a N,N′-bismaleimide of formula IV

EP 0 384 711 A1

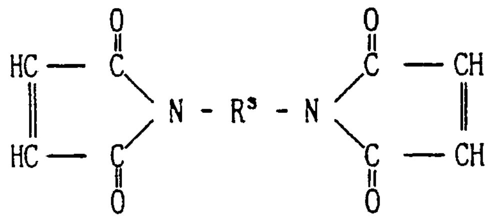

(IV)

in which $R^3$ is a divalent $C_{2-20}$ organic residue.
The mixture of monomers of formulae I and IV is also claimed.

# MOULDED PRODUCT FOR SLIDING PARTS

## Field of the Invention

The present invention relates to moulded products for use as sliding parts.

## Background of the Invention

Plastics resins have, in general, good self-lubricating properties, and many are adapted for use as sliding parts. Suitable such materials include fluororesins such as polytetrafluoroethylene (PTFE) polyacetals, polyamides, ultra-high molecular weight polyethylene and phenol resins, usually with the addition of a filler.

These resins, however, have poor heat-resistance: their mechanical strength and resin properties deteriorate at elevated temperatures, so that their field of use is limited. For use in their place, super-heat-resistant resins called "superengineering plastics" have been investigated, among which polyimide resins have attracted attention as having excellent heat-resistance and good sliding properties in respect of, inter alia, friction and wear-resistance.

Polyimide resins can be divided into two groups, namely, aromatic polyimide resins based on the polycondensation of aromatic tetracarboxylic acids with diamines, and polyaminobismaleimide resins based on polyaddition of bismaleimides with diamines. The former have mouldability; special apparatus must therefore be used, and their wide- spread use has been prevented, despite their many advantageous properties. The latter, i.e. polyaminobismaleimide resins, have found wide-spread use in industry, since they exhibit not only superior heat-resistance but also better mouldability (see, for example, Japanese Patent Publications Nos. 23250/1971 and 5959/1977).

However, conventional polyaminobismaleimide resins produced from N,N′-(4,4′,-diphenylmethane)-bismaleimide and 4,4′-diaminodiphenylmethane have poor impact-resistance and flexibility, so that moulded sliding parts using them as the matrix resin are brittle. Despite excellent friction properties and wear-resistance, their coefficient of kinetic friction determined at constant velocity under constant load often fluctuates for a single resin product. Such fluctuation is considerable during the early period of the friction test. A similar tendency is seen also in tests conducted at a varying velocity under a varying load. Such fluctuation may cause an uneven sliding effect at the surface of, say, bearings composed of these resins. Their specific wear rate is usually smaller than for other resins, when the sliding surface of the counter element is smooth (i.e. at an Ra value of ca. 0.1 µm), but larger than for other resins, if the sliding surface of the counter element is rough (i.e. at an Ra value over ca. 1.0 µm). This means that the sliding surface of the counter element must be finished to an extremely smooth surface, in order to provide long life for the sliding part element, and this may be uneconomic.

An object behind the present invention was to remedy the problems described above.

## Summary of the Invention

According to one aspect of the present invention, a material, suitable for use in producing sliding part elements of a cured moulded thermosetting resin is a premix for the moulded products: the premix comprises a monomer mixture from which the thermosetting matrix resin can be produced and a sliding performance-facilitating filler, and the monomer mixture comprises, as a frst essential component, an amine-terminated amic acid of formula (I)

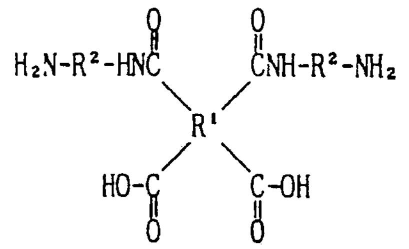

(I)

in which $R^1$ denotes a tetravalent aromatic residue having 6 to 20 carbon atoms and $R^2$ denotes a divalent organic residue having 2 to 20 carbon atoms,
said amic acid being produced by reacting a tetracarboxylic dianhydride represented by the formula (II),

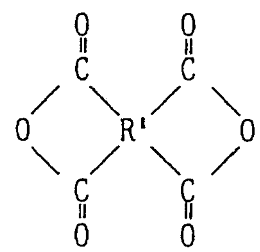

(II)

wherein $R^1$ has the same meaning as defined above, with a diamine compound represented by the formula (III),
$H_2N - R^2 - HN_2$ (III)
wherein $R^2$ has the same meaning as defined above,
and, as a second essential component, an N,N′-bismaleimide of the formula (IV),

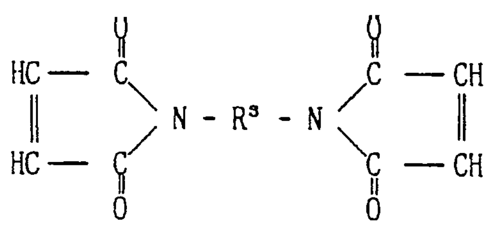

(IV)

wherein $R^3$ denotes a divalent organic residue having 2 to 20 carbon atoms, the mole ratio of [N,N′-bismaleimide]/[amine-terminated amic acid] being in the range from 1 to 3.

According to another aspect of the present invention, there is provided a material for producing sliding part elements of cured molded product of a thermosetting resin, consisting of a premix for said molded product, which comprises a prepolymer product mixture for the thermosetting matrix resin and a sliding performance facilitating filler, therein said prepolymer product mixture comprises an adduct resulting from a limited addition polymerization of an amine-terminated amic acid expressed by the formula (I)

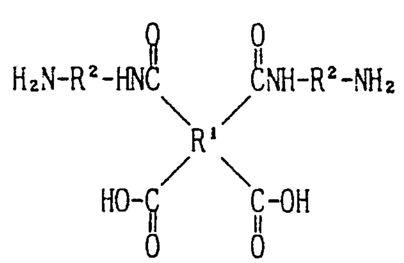

(I)

in which $R^1$ and $R^2$ have the same meaning as defined previously,
said amic acid being produced by reacting a tetracarboxylic dianhydride represented by the formula (II) as given previously, with a diamine compound represented by the formula (III) as given previously,
with an N,N′-bismaleimide of the formula (IV),

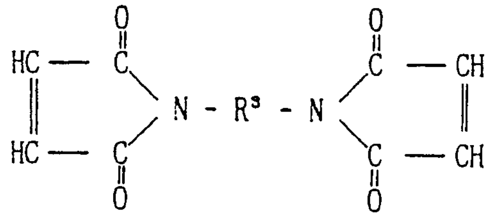
(IV)

wherein $R^3$ has the same meaning as given previously, the mole ratio of [N,N'-bismaleimide]/[amine-terminated amic acid] being in the range from 1 to 3.

According to a further aspect of the present invention, there is provided sliding part elements of cured molded product, comprising a cured thermosetting matrix resin and a sliding performance facilitating filler, wherein said thermosetting matrix resin has been resulting from addition cross-linking of an amine-terminated amic acid expressed by the formula (I) as given above with an N,N'-bismaleimide of the formula (IV) as given previously, the mole ratio of [N,N'-bismaleimide]/[amine-terminated amic acid] being in the range from 1 to 3.

## Brief Description of the Drawings

Figs. 1 and 2 are graphs each showing the relationship between the coefficient of kinetic friction and the friction distance observed in Examples of the present invention and in Conparison Examples.

## Detailed Description of the Invention

In the context of the present Application, it is meant by the sliding part element an element for use for supporting loads or transmitting loads to other element, which has at least a surface fittingly and slidably contacting with said other element, such as for example, toothed wheels, bearings, thrust washers, valve seats, clutch facings, guide members and so on.

For the tetracarboxylic dianhydride represented by the formula (II), there may be enumerated, for example, 3,3', 4,4' -benzophenonetetracarboxylic dianhydride, pyromellitic dianhydride, 2,3,6,7-naphthalenetetracarboxylic dianhydride, 3,3',4,4'-diphenyltetracarboxylic dianhydride, 2,2-bis(3, 4-dicarboxyphenyl)-propane dianhydride, bis(3,4-dicarboxyphenyl)-ether dianhydride, 2,6-dichloronaphthalene-1,4,5,8-tetracarboxylic dianhydride, phenanthrene-1,8,9,10-tetracarboxylic dianhydride, 1,1-bis (2,3-dicarboxyphenyl)-ethane dianhydride, bis(3,4-dicarboxyphenyl)-methane dianhydride, bis (3,4-dicarboxyphenyl)-sulfone dianhydride, 1,1,1,3,3,3-hexafluoro-2,2-bis (3,4-dicarboxyphenyl)-propane dianhydride and so on. They may be employed alone or in mixture of two or more of them. Most preferably, 3,3', 4,4'-benzophenonetetracarboxylic dianhydride is used.

For the diamine compound represented by the formula (III), there may be enumerated, for example, 4,4'-diaminodiphenylmethane, 4,4'-diaminodiphenylpropane, 4,4'-diaminodiphenyl sulfide, 3,3'-diaminodiphenyl sulfone, 4,4'- diaminodiphenyl ether, 3,3'-dimethyl-4,4'-diaminodiphenylmethane, 3,3'-diethyl-4,4'-diaminodiphenylmethane, 3,3'-dimethoxy-4,4'-diaminodiphenylmethane, 3,3'-dimethyl-4,4'-diaminodiphenyl ether, 3,3'-diethoxy-4,4'-diaminodiphenyl sulfone, 3,3'-diethyl-4,4'-diaminodiphenylpropane, 3,3'-dimethyl-4,4'-diaminobenzophenone, 3,3'-diaminodiphenylmethane, 3,3'-diaminodiphenyl ether, 2,4-diaminotoluene, 2,6-diaminotoluene, 2,4-diaminoanisole, 2,4-diamino-monochlorobenzene, 2,4-diaminofluorobenzene, m-phenylenediamine, p-phenylenediamine, m-xylylenediamine, p-xylylenediamine, 3,3'-diaminobenzophenone, 1,3-bis (3-aminophenoxy)-benzene, 9,9-bis (4-aminophenyl)-fluorene and so on. They can be employed alone or in mixture of two or more of them. 4,4'-diaminodiphenylmethane may preferably be employed.

Examples of the N,N'-bismaleimide of the formula (IV) include N,N'-ethylenebismaleimide, N,N'-m-phenylenebismaleimide, N,N'-p-phenylenebismaleimide, N,N'-hexamethylenebismaleimide, N,N'-4,4'-diphenylmethanebismaleimide, N,N'-4,4'-diphenyletherbismaleimide, N,N'-4,4'-diphenylsulfonebismaleimide, N,N'-dicyclohexylmethanebismaleimide, N,N'-m-xylylenebismaleimide, N,N'-(3,3'-dichloro-4,4'-bisphenylene)-bismaleimide and N,N'-(3,3'-diphenyloxy)-bismaleimide. They can be employed alone or in mixture of two or more of them. N,N'-4,4'-diphenylmethanebismaleimide may preferably be employed.

For obtaining the novel material for sliding part element of cured molded product of a thermosetting resin according to the present invention, it is possible to start either with a simple monomeric mixture comrising an amine-terminated amic acid of the formula (I) and an N,N'-bismaleimide of the formula (IV) or

with a prepolymer product mixture prepared preliminarily by a limited addition polymerization of an amine-terminated amic acid of the formula (I) with an N,N′-bismaleimide of the formula (IV), by formulating a premix for the molding by compounding such mixture with an adequate amount of a sliding performance facilitating filler.

For synthesizing the amine-terminated amic acid of the formula (I) to be employed in the above-mentioned premix, it is preferable to proceed as follows:

A diamine compound expressed by the formula (III) is dissolved in an organic solvent, preferably in an amide solvent, such as, N-methyl-2-pyrrolidone, N,N-dimethylacetamide, N,N-dimethylformamide or so on, and thereto is added dropwise a solution of a selected tetracarboxylic dianhydride of the formula (II) in the same solvent, whereupon the mixture is agitated at a temperature in the range from room temperature to about 50 °C for a period from about 30 minutes to about 3 hours to obtain the contemplated amic acid. The reaction may be effected using at least two moles of the diamine per one mole of the tetracarboxylic dianhydride, while it is preferable to choose a mole ratio of the former to the latter of 3 to 5 for improving the purity of the product. After the reaction, the reaction mixture is introduced into a large amount of water and the thereby coagulated precipitate is separated by filtration. The filter cake is washed with acetone, methanol or so on, in order to remove the unreacted excess of the diamine, whereupon the so washed mass was dried (under a reduced pressure) to obtain the amine-terminatd amic acid of the formula (I) in a pulverous form.

The premix is prepared by mixing the thus obtained pulverous amine-terminated amic acid of the formula (I) with a N,N′-bismaleimide expressed by the formula (IV), wherein the mole ratio of the N,N′-bismaleimide to the amine-terminated amic acid is to be chosen within the range of from 1 to 3. If the mole ratio is less than 1, the heat resistance of the cured and molded product of thermosetting resin obtained therefrom will be insufficient and, if this is higher than 3, the cross-linkage concentration in the molded product becomes too high, resulting in an occurrence of microcracks to thereby deteriorate the mechanical properties.

An amine-terminated amic acid of the formula (I) to be employed for the production of the prepolymer product mixture according to the present invention described previously can be prepared as follows:

A diamine compound expressed by the formula (III) is dissolved in an organic solvent, preferably in an amide solvent, such as, N-methyl-2-pyrrolidone, N,N-dimethylacetamide, N,N-dimethylformamide or so on, and thereto is added dropwise a solution of a selected tetracarboxilic dianhydride of the formula (II) in the same solvent, whereupon the mixture is agitated at a temperature in the range from room temperature to about 50 °C for a period from about 30 minutes to about 3 hours to obtain the contemplated amic acid

In order to prepare the prepolymer product mixture according to the present invention by a preliminary limited addition polymerization of the amine-terminated amic acid of formula (I) with the N,N′-bismaleimide of formula (IV), a selected N,N′-bismaleimide represented by the formula (IV) is added to a solution of a selected amine-terminated amic acid expressed by the formula (I) prepared as above. It is preferable to choose the mole ratio of the N,N′-bismaleimide to the amine-terminated amic acid within a range of [N,N′-bismaleimide]/[amine-terminated amic acid] of from 1 to 3. If this ratio is less than 1, the heat resistance of the cured molded product of thermosetting resin obtained therefrom will be insufficient and, if this is higher than 3, the cross-linkage concentration in the molded product becomes too high, resulting in an occurrence of microcracks to thereby deteriorate the mechanical properties.

The limited addition polymerization of the amine-terminated amic acid of formula (I) with the N,N′-bismaleimide of formula (IV) for obtaining the prepolymer product mixture may be effected at a temperature in the range from 80 to 160 °C for a reaction duration in the range from about 0.5 to about 3 hours to obtain the contemplated prepolymer product mixture.

If the reaction temperature is lower than 80 °C, the Michael addition reaction of the amine with the maleimide will not proceed sufficiently, whereas a reaction temperature above 160 °C may cause an undesirable progress of three-dimensional cross-linking, resulting in a decrease in the solubility of the reaction product in the solvent, whereby the oligomeric product formed will become separated from the solvent inside the reaction solution.

In order to isolate the oligomeric reaction product in a pulverous form from the reaction mixture, the reaction mixture is introduced into a non-solvent, such as, water, methanol, acetone or so on, preferably in methanol, so as to cause precipitation of the oligomeric product. The thus precipitated reaction product is separated by filtration and dried (under a reduced pressure) into a pulverous mass of the prepolymer product mixture.

The premix prepared as described above is used for molding a sliding part element of cured thermosetting resin exhibiting excellent mechanical properties with high heat resistance. Here, it is permitted to incorporate in the resin a curing accelerator for lowering the curing temperature or for

decreasing the molding time.

As the curing accelerator, tertiary amines, imidazoles, peroxides and so on may be employed. Examples of the tertiary amines include trialkylamines having in the alkyl group 1 - 14 carbon atoms, such as, trimethylamine, triethylamine, tripropylamine and tributylamine; N,N-dimethylbenzylamine; N,N,N′,N′-tetramethylethylenediamine; N,N-diethylcyclohexylamine; N-methylmorpholine; N-methylpiperidine; 1,4-diazabicyclo[2,2,2]octane (DABCO); 1,8-diazabicyclo[5.4.0]undecene-7 (DBU) and so on.

For the imidazoles, there may be enumerated, for example, 2-methylimidazole, 2-phenylimidazole, 2-ethyl-4-methylimidazole and so on.

For the peroxides, there may be enumerated, for example, benzoyl peroxide, tert-butyl perbenzoate and the like.

The sliding performance facilitating filler to be employed according to the present invention has superior abilities, especially in facilitating sliding performances, such as, friction property, wear resistance and so on, and is inert to the premix and to the cured thermosetting matrix resin according to the present invention. It consists of an organic or inorganic substance in a form of pulver or fiber and is incorporated in the novel material according to the invention, essentially in order to improve the sliding performances of the molded sliding part elements.

Examples of the sliding performance facilitating filler include fluororesins, such as, polytetrafluoroethylene resin (PTFE) etc., asbestos, graphite, molybdenum disulfide, wolfram disulfide, molybdenum trioxide, lead monoxide, quartz powder, silicon nitride, boron nitride, graphite fluoride, calcium fluoride, antimony oxide, copper metal powder, bronze powder, carbon fiber, aramid fiber and so on. Among them, PTFE, graphite, molybdenum disulfide, boron nitride and carbon fiber are especially recommended. They may be incorporated in the material according to the present invention alone or in mixtures of two or more of them.

The amount of the sliding performance facilitating filler to be incorporated in the material, namely, the premix, according to the invention may range, on weight basis, from 2 to 200 parts, preferably from 10 to 150 parts per 100 parts of the thermosetting matrix resin. If this amount is short of 2 parts per 100 parts by weight of the matrix resin, no sufficient improvement in the sliding performances is achieved, whereas, if it exceeds 200 parts by weight, problems may occur, due to, such as, decrease in the mechanical strengths and inferior moldability,

It is permissible to incorporate in the material according to the present invention one or more of conventional additives, such as antioxidant, heat stabilizer, UV-absorber, fire retardant, antistatic agent, lubricant, coloring agent and so on, each in an amount within a limit such that it does not obstruct the object of the present invention.

It is also possible to incorporate in the material for the sliding part elements according to the present invention various other thermosetting resins, such as, phenol resins, epoxy resins and so on; various thermoplastic resins, such as, polyethylene, polypropylene, polyamides, polycarbonates, polysulfones, polyethersulfones, polyetherketones, polyetheretherketones, modified polyphenylene oxides, polyphenylene sulfides, liquid crystal polymers and so on: fibrous reinforcement materials, such as, glass fiber, alumina fiber, potassium titanate whisker and so on; fillers other than the sliding performance facilitating filler, such as, pulverous clay, flaky mica, silica powder, glass beads, alumina powder, calcium carbonate powder and so on, each in an adequate amount in accordance with each specific effect contemplated.

Various sliding part elements are produced by molding the premix (molding compound) prepared as above. Molding can be effected in the same manner as in the conventional technique employing conventional polyaminobismaleimide resins, by means of press molding, transfer molding and so on. Thus, a molding compound is prepared by dry blending a requisite amount of a sliding performance facilitating filler with either a monomeric mixture of an N,N′-bismaleimide and an amine-terminated amic acid or a pulverized prepolymer product mixture obtained from a limited addition polymerization of an N,N′-bismaleimide with an amine-terminated amic acid. The so prepared molding compound is charged in a metal mold and is press-molded with heating at a temperature of, usually, 200 - 300 °C under a pressure of, in general, over 100 $Kg/cm^2$ to obtain a cured molding product of a sliding part element.

It is possible, if necessary, to prepare, at first, a pre-molded green product by effecting a provisional press molding of such premix under a condition not causing cross-linking of the matrix resin, whereupon this pre-molded green product is charged in the finishing mold to effect final press molding under the conditions suggested above.

In order to achieve a better performance of mold-releasing of the molded product, it is possible to employ a mold-releasing agent, such as, a metal soap, for example, cobalt naphthenate or the like; a higher fatty acid, for example, stearic acid or so on; a silicone resin; a fatty acid amide and so on.

Using the premix as described above, molded products of various sliding elements exhibiting a superior

heat resistance and better sliding performances can be obtained. While it is practical in general to incorporate a heat treatement called "post curing" for a predetermined period of time at a predetermined temperature after it has been taken out from the metal mold, it is possible for the thus molded sliding part elements according to the present invention to dispense with such a "post curing".

Various sliding part elements having at least a surface which contacts slidably with the sliding face of the sliding counter member and which serves for supporting loads or transmitting loads to other member are produced in the manner described above for use in the fields of electric and electronic materials, aircraft and space technology instruments, precision machines and so on, such as for example, toothed wheels, bearings, thrust washers, valve seats, clutch facing and guide members.

As described above, sliding part elements can be obtained, which exhibit very excellent practical sliding performances, such as, steady kinetic friction coefficient with little fluctuation over a long running period, lower specific wear rate independent of the roughness of sliding surface of the counter member and so on, with heat resistance comparable to those made from conventional polyaminobismaleimide resins, by the employment of the special premix for the thermosetting resin molded product according to the invention composed of a requisite amount of a sliding performance facilitating filler and a monomeric mixture or a prepolymeric addition product of a specific amine-terminated amic acid with a special N,N′-bismaleimide.

## Detailed Description of the Preferred Embodiments

Below, the present invention will further be described concretely with reference to the preferred embodiments by way of Examples and Comparison Examples. It is not intended to restrict in any sense the spirit and scope of the present invention by these specific Examples.

### Production Example 1

Preparation of Monomeric Mixture of Amine-terminated Amic Acid and N,N′-bismaleimide

≪Synthesis of Amine-terminated Amic Acid≫

In a three-necked 300 ml flask equipped with a stirrer, a dropping funnel and a calcium chloride desiccator tube, there was charged a solution prepared by dissolving 0.2 mole of a diamine compound, as denoted in Table 1 below, in 40 ml of dried dimethylacetamide and thereto was added dropwise a solution prepared by dissolving 0.05 mole of a tetracarboxylic dianhydride (acid dianhydride), as given also in Table 1 below, in 100 ml of dimethylacetamide from the dropping funnel, at room temperature, over 1 hour, while agitating the ingredients. After the dropping was over, the mixture was further agitated for 3 hours at room temperature. This solution was introduced into 1 liter of water and the thereby formed coagulated precipitate was separated by filtration and the precipitate was washed with acetone under reflux. This was filtered again and the filter cake was dried under a reduced pressure of at highest 10 mmHg at 25 °C for 5 hours to obtain pale yellow powder. The results of the synthesis are summarized in Table 1.

Table 1

| Synthesis Experiment No. | Diamine (III) used (Amount of Charge in g) | Acid Dianhyd. (II) used (Amount of Charge in g) | Yield (%) |
|---|---|---|---|
| A-1 | MDA (39.7) [1] | BTDA (16.1) [3] | 94 |
| A-2 | ODA (40.1) [2] | BTDA (16.1) | 95 |
| A-3 | MDA (39.7) | PMDA (10.9) [4] | 95 |
| Notes: | | | |

1) 4,4′-Diaminodiphenylmethane
2) 4,4′-Diaminodiphenyl ether
3) 3,3′,4,4′-Benzophenonetetracarboxilic dianhydride
4) Pyromellitic dianhydride

≪Preparation of monomeric mixture of amine-terminated amic acid and N,N′-bismaleimide≫

Using the amine-terminated amic acids A-1 to A-3 obtained as above and two N,N′-bismaleimide compounds as given in Table 2 below, seven samples of well mixed monomeric mixture C-1 to C-7 were prepared, each composition of which is given also in Table 2 below.

Table 2

| Monom. mixture | Amount (gram) of A [5] | | | Amt. (gram) of B [6] | | Mole ratio [B]/[A] |
|---|---|---|---|---|---|---|
| | A-1 | A-2 | A-3 | BMI [7] | OMI [8] | |
| C-1 | 100 | | | 99.7 | | 2/1 |
| C-2 | 100 | | | 74.8 | | 1.5/1 |
| C-3 | 100 | | | 49.9 | | 1/1 |
| C-4 | 100 | | | | 100.3 | 2/1 |
| C-5 | | 100 | | 99.2 | | 2/1 |
| C-6 | | | 100 | 116.6 | | 2/1 |
| C-7 | 100 | | | 149.6 | | 3/1 |
| Notes: | | | | | | |

5): Amine-terminated amic acid
6): N,N′-bismaleimide
7): N,N′-4,4′-diphenylmethanebismaleimide
8): N,N′-4,4′-diphenyletherbismaleimide

<u>Production Example 2</u>

Synthesis of Prepolymer Product Mixture of Amine-terminated Amic Acid with N,N′-bismaleimide

In a three-necked 300 ml flask equipped with a stirrer, a dropping funnel and a calcium chloride desiccator tube, there was charged a solution prepared by dissolving 0.2 mole of a diamine compound, as notified in Table 3 below, in 40 ml of dried dimethylacetamide and thereto was added dropwise a solution prepared by dissolving 0. 1 mole of a tetracarboxylic dianhydride, as given also in Table 3 below, in 100 ml

of dimethylacetamide from the dropping funnel at room temperature over 1 hour while agitation. After the dropping was over, the mixture was further agitated for 3 hours at room temperature. To this solution was added an N,N′-bismaleimide, as given in Table 3, and the reaction was effected at 120° C for 1 hour. After completion of the reaction, the reaction solution was introduced into 1 liter of methanol and the thereby formed precipitate of the oligomeric addition polymerization product was separated by filtration and was washed with methanol. This was filtered again and the filtered cake was dried under a reduced pressure of at highest 10 mmHg at 25 ° C for 5 hours, followed by crushing in a mortar and sieving on a 60-mesh sieve. In this manner, pale yellow powdery prepolymer products (P-1 to P-8) were obtained. Particulars of the conditions of production of the prepolymer product mixtures including their yields and the elementary analysis data of each prepolymer product obtained are summarized in Table 3 below.

Table 3

| Prepolymer Product | Condition of Preparation of Prepolymer | | | | | | | | | Elementary Analysis (%) | | |
|---|---|---|---|---|---|---|---|---|---|---|---|---|
| | Amount [10] of Compound (III) | | Amount [10] of Compound (II) | | Amount [10] of Compound (IV) | | Curing Accel. | Mole Ratio [IV]/[I] [11] | Yield in g (in %) | C found (calc.) | H found (Calc.) | N found (Calc.) |
| | MDA [1] | ODA [2] | BTDA [3] | PMDA [4] | BMI [7] | OMI [8] | DABCO [9] | | | | | |
| P-1 | 39.7 | | 32.2 | | 71.7 | | | 2/1 | 140.7 (98) | 71.63 (71.32) | 3.87 (4.08) | 7.95 (7.83) |
| P-2 | 39.7 | | 32.2 | | 53.8 | | | 1.5/1 | 114.4 (91) | 71.01 (71.38) | 3.82 (4.09) | 7.95 (7.83) |
| P-3 | 39.7 | | 32.2 | | 35.9 | | | 1/1 | 88.4 (82) | 71.28 (71.45) | 3.93 (4.11) | 7.81 (7.83) |
| P-4 | 39.7 | | 32.2 | | | 36.3 | | 2/1 | 106.0 (98) | 69.93 (69.45) | 3.62 (3.79) | 7.91 (7.81) |
| P-5 | | 40.1 | 32.2 | | 71.7 | | | 2/1 | 142.6 (99) | 69.38 (69.45) | 3.56 (3.79) | 7.97 (7.81) |
| P-6 | 39.7 | | | 21.8 | 71.7 | | | 2/1 | 126.5 (95) | 70.38 (70.58) | 4.03 (4.10) | 8.26 (8.44) |
| P-7 | 39.7 | | 32.2 | | 107.6 | | | 3/1 | 174.1 (97) | 71.50 (71.21) | 3.94 (4.07) | 7.91 (7.83) |
| P-8 | 39.7 | | 32.2 | | 71.7 | | 1.4 | 2/1 | 142.2 (99) | 71.30 (71.32) | 3.83 (4.08) | 7.81 (7.83) |

Notes:

1) to 8): Refer to those in Tables 1 and 2

9): 1,4-diazabicyclo[2.2.2]octane, charge amount in gram

10): Charge amount in gram

11): Mole ratio of [N,N′-bismaleimide [IV] / [amine-terminated amic acid (I)]

Examples 1 to 33

Molding compounds. namely premixes, were prepared by sufficiently blending the monomeric mixtures C-1 to C-7 or the prepolymer product mixtures P-1 to P-8, as obtained in the foregoing Production Examples, with various sliding performance facilitating fillers, as given below, at room temperature. Each of these premixes was charged in a metal mold heated at 250 °C and the molding was performed under a pressure of 160 kgf/cm$^2$ for 30 minutes to obtain a primary molding product. The primary molding product was then subjected to a post curing in a hot-air geared oven under a condition of 200 °C for 24 hours for Examples 9, 12, 14, 26, 29 and 31 and under a condition of 250 °C for 10 hours for the other Examples.

Sliding performace facilitating fillers employed were:

Carbon fiber : Torayca Chopped Fiber T008A-003 (Trademark) of Toray Industries, Ltd.

Graphite : CP-150 (Trademark) of Chuetsu Grapfite Works Co., Ltd

Molybdenum disulfide: Morypowder-PS (Trademark) of Sumikou Junkatsuzai K. K.

PTFE : Lubron L-2 (Trademark) of Daikin Industries, Ltd.

Boron nitride : Denkaboron-nitride GP (Trademark) of Denki Kagaku Kogyo K.K.

For each of the molded products, flexural strength, Izod impact strength and friction-wear behavior were observed. The following test methods were employed:

For Flexural Strength and Izod Impact Strength

Measurements were carried out in accordance with the test standards of JIS K-6911 for general thermosetting resins.

For Friction-Wear Behavior

Tests were carried out in accordance with the test method of JIS K-7218 for sliding wear resistance of plastics using a friction-wear testing machine Model EFM-III-F of the firm K.K. Orientec under the employment of, as the material of the counter element, a carbon steel for machine structural use, namely, S45C of JIS G 4051.

Compositions of the molded products tested and the test results are summarized in Tables 4 and 5 and illustrated also in Figs. 1 and 2, in which Fig. 1 shows the change in the coefficient of kinetic friction over the friction distance under the condition 1 of Table 4 and Fig. 2 the change in the coefficient of kinetic friction over the friction distance under the condition 2 of Table 4. The data for the coefficient of kinetic friction given in Tables 4 to 6 are those determined in the steady range after passing a friction distance over 3 km.

Table 4

| Example No. | Formulation of Premix (Charge Amount of Ingredients in Part by Weight) | | | | | | | | | | | | Properties of the Molded Sliding Part Element | | | | | |
|---|---|---|---|---|---|---|---|---|---|---|---|---|---|---|---|---|---|---|
| | Monomeric Mixture | | | | | | | Sliding Performance Facil. Filler | | | | | Flexural Strength ($kgf/mm^2$) | Izod Imp. Strength (with Notch) (kgf•cm/cm) | Friction-Wear Behavior | | | |
| | C-1 | C-2 | C-3 | C-4 | C-5 | C-6 | C-7 | Carbon Fiber | Graphite | Molybdenum Disulfide | PTFE | Boron Nitride | | | Coeff. of kinetic Frict. | | Specific Wear Rate *5 | |
| | | | | | | | | | | | | | | | under Condition | | | |
| | | | | | | | | | | | | | | | 1 *1 | 2 *2 | 3 *3 | 4 *4 |
| 1 | 100 | | | | | | | | 45 | 5 | | | 13.0 | 4.0 | 0.14 | 0.13 | 0.8 | 0.1 |
| 2 | | 100 | | | | | | | 45 | 5 | | | 12.5 | 4.1 | 0.14 | 0.13 | 0.5 | 0.3 |
| 3 | | | 100 | | | | | | 45 | 5 | | | 11.7 | 4.0 | 0.14 | 0.12 | 0.4 | 0.2 |
| 4 | | | | 100 | | | | | 45 | 5 | | | 12.0 | 3.9 | 0.15 | 0.15 | 0.7 | 0.2 |
| 5 | | | | | 100 | | | | 45 | 5 | | | 11.8 | 4.1 | 0.15 | 0.14 | 0.3 | 0.3 |
| 6 | | | | | | 100 | | | 45 | 5 | | | 12.1 | 4.1 | 0.14 | 0.13 | 0.5 | 0.1 |
| 7 | | | | | | | 100 | | 45 | 5 | | | 12.1 | 4.2 | 0.15 | 0.13 | 0.6 | 0.2 |
| 8 | 100 | | | | | | | 50 | | | | | 25.0 | - | 0.17 | 0.15 | - | - |
| 9 | 100 | | | | | | | | | | 50 | | 10.9 | - | 0.09 | 0.08 | 0.7 | 0.1 |
| 10 | | 100 | | | | | | 50 | 50 | | | | 18.8 | - | 0.16 | 0.14 | - | - |
| 11 | | | 100 | | | | | 50 | 80 | 20 | | | 16.4 | - | 0.12 | 0.12 | - | - |
| 12 | | | | 100 | | | | | | | 10 | | 13.5 | - | 0.16 | 0.14 | 0.9 | 0.3 |
| 13 | | | | | 100 | | | | | | | 30 | 11.6 | - | 0.14 | 0.13 | 0.6 | 0.2 |
| 14 | | | | | | 100 | | | | 50 | 30 | | 8.8 | - | 0.11 | 0.10 | 0.5 | 0.1 |
| 15 | 100 | | | | | | | 50 | 50 | | | | 18.8 | - | 0.16 | 0.14 | - | - |
| 16 | | | | | 100 | | | 50 | 80 | 20 | | | 16.4 | - | 0.12 | 0.12 | - | - |

Notes:

*1 : testing load p = 8 $kgf/cm^2$, testing velocity v = 80 cm/sec
*2 : testing load p = 50 $kgf/cm^2$, testing velocity v = 80 cm/sec
*3 : testing load p = 8 $kgf/cm^2$, testing velocity v = 80 cm/sec
*4 : testing load p = 8 $kgf/cm^2$, testing velocity v = 80 m/sec
*5 : $10^{-1}$ $mm^3/kgf \cdot km$
The surface roughness of the counter element Ra = 1.0 μm in test *3 and Ra = 0.1 μm in test *4.

Table 5

| Example No. | Formulation of Premix (Charge Amount of Ingredients in Part by Weight) | | | | | | | | | | | | | Properties of the Molded Sliding Part Element | | | | | |
|---|---|---|---|---|---|---|---|---|---|---|---|---|---|---|---|---|---|---|---|
| | Prepolymer Product Mixture | | | | | | | | Sliding Performance Facil. Filler | | | | | Flexural Strength (kgf/mm²) | Izod Imp. Strength (with Notch) (kgf•cm/cm) | Friction-Wear Behavior | | | |
| | | | | | | | | | | | | | | | | Coeff. of kinetic Friction | | Specific Wear Rate *5 | |
| | | | | | | | | | | | | | | | | under Condition | | | |
| | P-1 | P-2 | P-3 | P-4 | P-5 | P-6 | P-7 | P-8 | Carbon Fiber | Graphite | Molybdenum Disulfide | PTFE | Boron Nitride | | | 1 *1 | 2 *2 | 3 *3 | 4 *4 |
| 17 | 100 | | | | | | | | | 45 | 5 | | | 14.7 | 3.9 | 0.15 | 0.12 | 0.8 | 0.1 |
| 18 | | 100 | | | | | | | | 45 | 5 | | | 14.5 | 4.1 | 0.15 | 0.13 | 0.6 | 0.1 |
| 19 | | | 100 | | | | | | | 45 | 5 | | | 14.2 | 4.0 | 0.13 | 0.13 | 0.5 | 0.2 |
| 20 | | | | 100 | | | | | | 45 | 5 | | | 14.6 | 4.2 | 0.14 | 0.12 | 0.8 | 0.3 |
| 21 | | | | | 100 | | | | | 45 | 5 | | | 14.4 | 4.0 | 0.13 | 0.11 | 0.7 | 0.2 |
| 22 | | | | | | 100 | | | | 45 | 5 | | | 14.5 | 3.9 | 0.15 | 0.14 | 0.4 | 0.2 |
| 23 | | | | | | | 100 | | | 45 | 5 | | | 14.2 | 4.1 | 0.13 | 0.12 | 0.7 | 0.2 |
| 24 | | | | | | | | 100 | | 45 | 5 | | | 14.3 | 4.2 | 0.14 | 0.14 | - | - |
| 25 | 100 | | | | | | | | 50 | | | | | 27.0 | - | 0.17 | 0.14 | - | - |
| 26 | 100 | | | | | | | | | | | 50 | | 13.0 | - | 0.08 | 0.07 | 0.5 | 0.2 |
| 27 | | 100 | | | | | | | 50 | 50 | | | | 21.0 | - | 0.16 | 0.14 | - | - |
| 28 | | | 100 | | | | | | 50 | 80 | 20 | | | 18.5 | - | 0.12 | 0.11 | - | - |
| 29 | | | | 100 | | | | | | | | 10 | | 15.7 | - | 0.15 | 0.14 | 0.8 | 0.3 |
| 30 | | | | | 100 | | | | | | | | 30 | 12.8 | - | 0.14 | 0.12 | 0.5 | 0.2 |
| 31 | | | | | | 100 | | | | | 50 | 30 | | 10.5 | - | 0.11 | 0.09 | 0.6 | 0.2 |
| 32 | 100 | | | | | | | | 50 | 50 | | | | 21.0 | - | 0.16 | 0.14 | - | - |
| 33 | | | | | 100 | | | | 50 | 80 | 20 | | | 18.5 | - | 0.12 | 0.11 | - | - |

Notes:

*1, *2, *3, *4 and *5 : See Table 4

The surface roughness of the counter element Ra = 1.0 μm in test *3 and Ra = 0.1 μm in test *4.

Comparison Examples 1 to 8

A pulverous product of a thermosetting resin of N,N′-4,4′-diphenylmethanebismaleimide/4,4′-diaminodiphenylmethane of a mole ratio of 2/1 was obtained in accordance with the procedures described in the Examples of the Japanese Patent Publication No. 23250/1971 (this product is denoted hereafter as R-1). The product R-1 was processed with varying sliding performance facilitating filler into primary molding products in the same manner as in the foregoing Examples. The primary molding products were then subjected each to a post curing in a hot-air Geer oven, under a condition of 200 °C for 24 hours for Comparison Examples 3, 6 and 8 or under a condition of 250 °C for 10 hours for the other Comparison Examples.

With respect to each of the molded product, same tests as in the foregoing Examples were carried out, the test results of which are recited in Table 6 and are illustrated in Figs. 1 and 2.

Table 6

| Comparative Example No. | Charge Amount of Ingredients in Part by Wt. | | | | | | Properties of the Molded Sliding Part Element | | | | | |
|---|---|---|---|---|---|---|---|---|---|---|---|---|
| | Resin | Sliding Performance Facil. Filler | | | | | Flexural Strength ($kgf/mm^2$) | Izod Imp. Strength (with Notch) (kgf•cm/cm) | Friction-Wear Behavior | | | |
| | R-1 | Carbon Fiber | Graphite | Molybdenum Disulfide | PTFE | Boron Nitride | | | Coefficient of kinetic Friction | | Specific Wear Rate *5 | |
| | | | | | | | | | under Condition | | | |
| | | | | | | | | | 1 *1 | 2 *2 | 3 *3 | 4 *4 |
| 1 | 100 | | 45 | 5 | | | 6.0 | 3.0 | 0.19~0.25 | 0.18~0.23 | 7.0 | 0.1 |
| 2 | 100 | 50 | | | | | 12.0 | - | 0.22~0.29 | 0.20~0.25 | - | - |
| 3 | 100 | | | | 50 | | 5.0 | - | 0.18~0.23 | 0.16~0.21 | 5.0 | 0.3 |
| 4 | 100 | 50 | 50 | | | | 9.5 | - | 0.20~0.26 | 0.18~0.25 | - | - |
| 5 | 100 | 50 | 80 | 20 | | | 8.5 | - | 0.19~0.25 | 0.17~0.23 | - | - |
| 6 | 100 | | | | 10 | | 7.0 | - | 0.20~0.27 | 0.21~0.25 | 6.5 | 0.5 |
| 7 | 100 | | | | | 30 | 5.2 | - | 0.18~0.23 | 0.16~0.21 | 4.5 | 0.3 |
| 8 | 100 | | | 50 | 30 | | 4.3 | - | 0.17~0.24 | 0.15~0.23 | 5.2 | 0.2 |

Notes:

*1 : testing load p = 8 $kgf/cm^2$, testing velocity v = 80 cm/sec
*2 : testing load p = 50 $kgf/cm^2$, testing velocity v = 80 cm/sec
*3 : testing load p = 8 $kgf/cm^2$, testing velocity v = 80 cm/sec
*4 : testing load p = 8 $kgf/cm^2$, testing velocity v = 80 cm/sec
*5 : $10^{-1}$ $mm^3$/kgf•km
The surface roughness of the counter element Ra = 1.0μm in test *3 and Ra = 0.1μm in test *4.

As is evident from the above, the molded products of Examples have higher values for the flexural strength and the Izod impact strength and lower value of coefficient of kinetic friction as compared with the prior art products of Comparison Examples. Further, it was confirmed that the specific wear rate became extremely large at higher surface roughness of the counter element for the products of Comparison Examples, whereas it is kept at a quite small value independent of the surface roughness of the counter element for the products of Examples.

Figs. 1 and 2 are graphic illustrations showing change of the value of coefficient of kinetic friction over the friction distance observed at a load p = 8 kgf/cm$^2$ and a velocity v = 80 cm/sec and at a load p = 50 kgf/cm$^2$ and a velocity v = 80 cm/sec respectively, from which it is seen that fluctuation in the frction is larger for the products of Comparison Examples than those of Examples in which the value of coefficient of kinetic friction is steady.

## Claims

1. A moulded product having slip characteristics, comprising a resin and a filler, the resin being obtainable by addition cross-linking of an amine-terminated amic acid of formula I

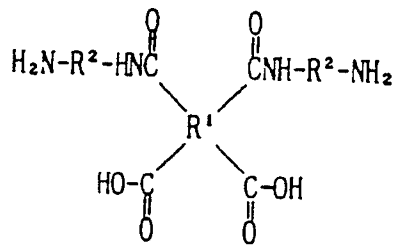

(I)

in which $R^1$ is a tetravalent $C_{5-20}$ aromatic residue and $R^2$ is a divalent $C_{2-20}$ organic residue and, per mole of the amic acid, 1 to 3 moles of a N,N′-bismaleimide of formula IV

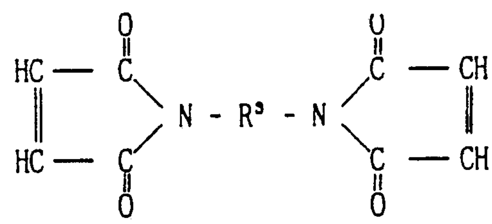

(IV)

in which $R_3$ is a divalent $C_{2-20}$ organic residue.

2. A premix, from which a product according to claim 1 can be obtained by curing, comprising an adduct and a filler, the adduct being obtainable by limited addition polymerisation of an amine-terminated amic acid as defined in claim 1 and, per mole thereof, 1 to 3 moles of a N,N′-bismaleimide as defined in claim 1.

3. A mixture of an amine-terminated amic acid as defined in claim 1 and, per mole thereof, 1 to 3 moles of a N,N′-bismaleimide as defined in claim 1.

4. A mixture according to claim 3, additionally comprising a filler, such that a product according to claim 1 can be obtained by curing.

5. A process for preparing a mixture according to claim 3, which comprises reacting a tetracarboxylic dianhydride of formula II

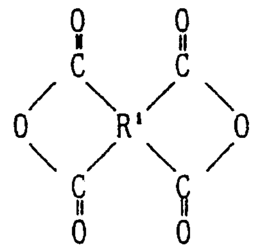

(II)

in which $R^1$ is as defined in claim 1, with a diamine of formula III

$H_2N-R^2-NH_2$ (III)

in which $R^2$ is as defined in claim 1, and mixing the resultant amine-terminated amic acid with the N,N′-bismaleimide.

6. A process for preparing a mixture according to claim 4, which comprises a process according to claim 5 and the additional step of adding the filler.

7. A process for preparing a premix according to claim 2, which comprises a process according to claim 6 and the further step of limited addition polymerisation of the mixture.

8. A process for preparing a product according to claim 1, which comprises a process according to claim 6 and the further step of curing the mixture.

Fig. 1

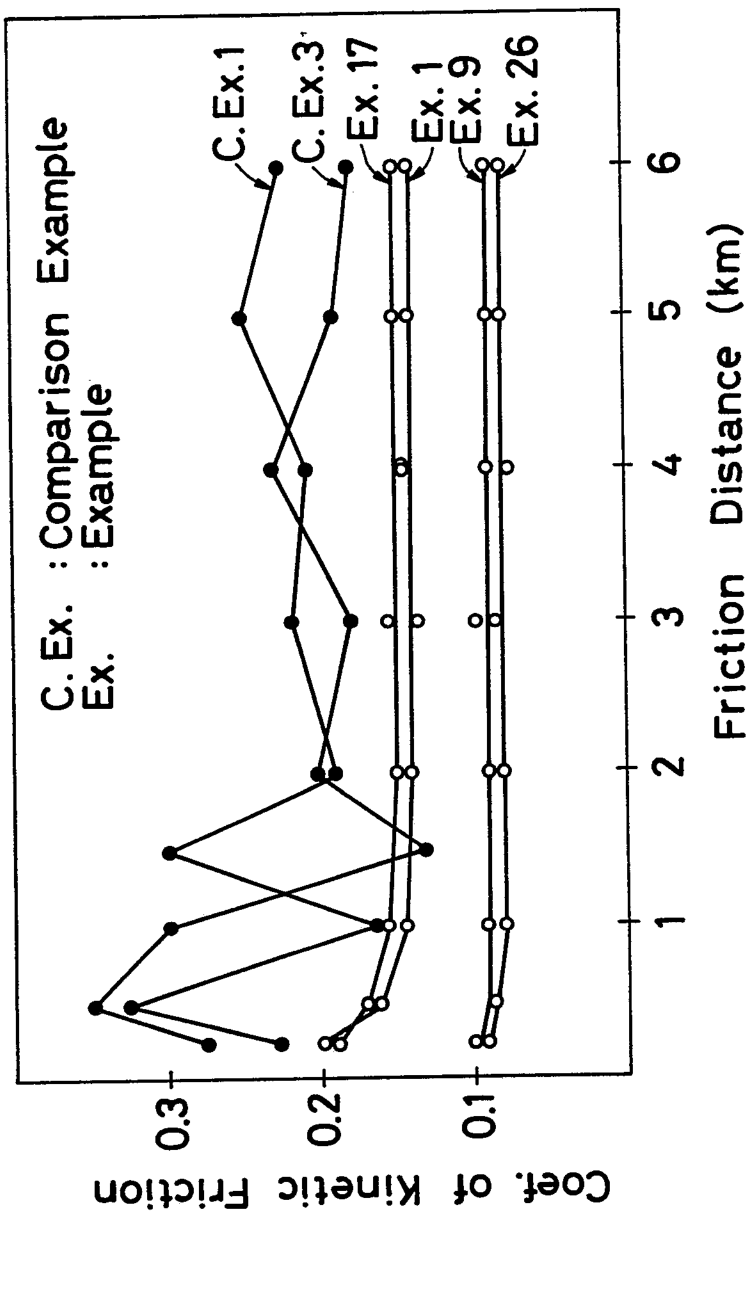
C. Ex. : Comparison Example
Ex. : Example
C. Ex. 1
C. Ex. 3
Ex. 17
Ex. 1
Ex. 9
Ex. 26
Coef. of Kinetic Friction
0.3
0.2
0.1
Friction Distance (km)
1
2
3
4
5
6

Fig. 2

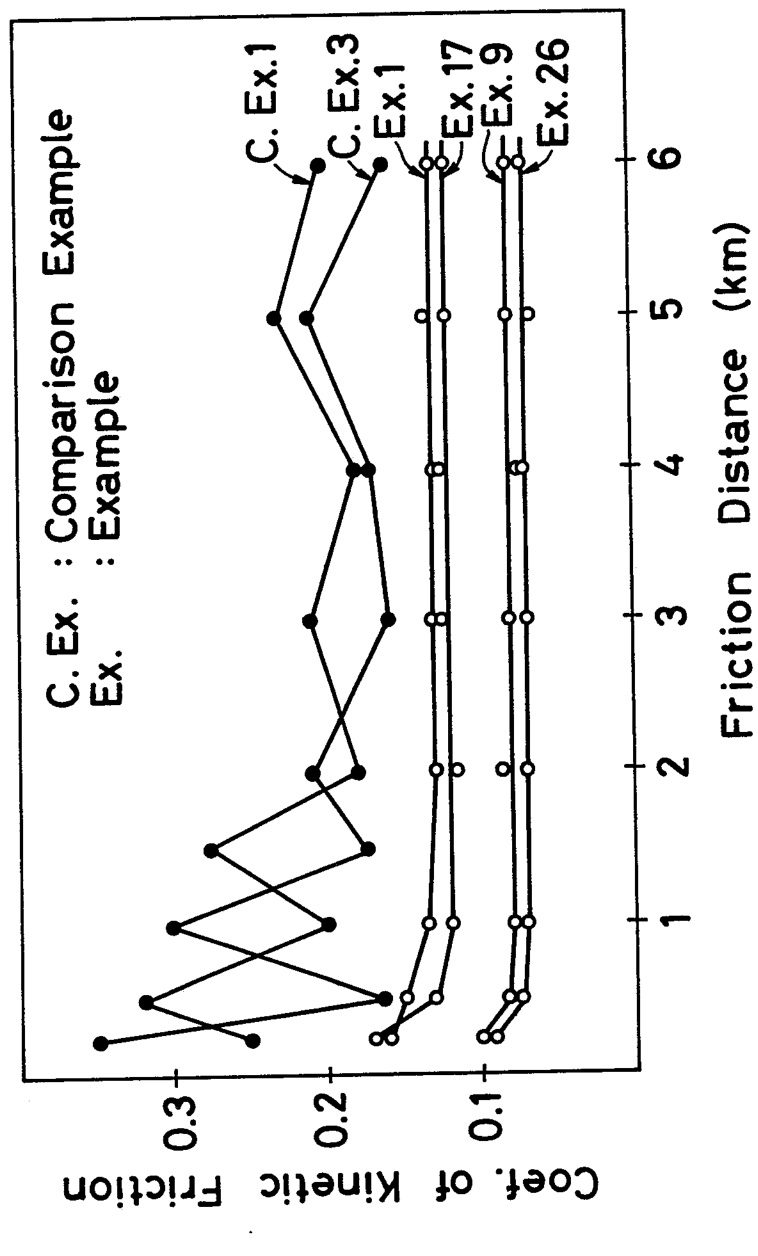
C. Ex. : Comparison Example
Ex. : Example
C. Ex.1
C. Ex.3
Ex.1
Ex.17
Ex.9
Ex.26
Coef. of Kinetic Friction
0.3
0.2
0.1
1
2
3
4
5
6
Friction Distance (km)

European Patent Office

# EUROPEAN SEARCH REPORT

Application Number

EP 90 30 1813

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 040 415 (KANEGAFUCHI)<br>----- | | C 08 G 73/12<br>F 16 C 33/20<br>C 08 G 73/10 |
| | | | **TECHNICAL FIELDS SEARCHED (Int. Cl.5)** |
| | | | C 08 G<br>F 16 C |

The present search report has been drawn up for all claims

| Place of search | Date of completion of the search | Examiner |
|---|---|---|
| THE HAGUE | 16-05-1990 | LEROY ALAIN |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)